# EUROPEAN PATENT APPLICATION

(11) **EP 4 490 993 A1**
(43) Date of publication of application: **15.01.2025**
(21) Application number: 24175834.1
(22) Date of filing: 14.05.2024
(51) Int. Cl.: A01B 1/16, A01B 1/24, A01C 5/02

(54) **GOLF-COURSE HOLE CUTTER**

(30) Priority: 14.07.2023 GB 202310862
(71) Applicant: Buckholt, James Michael, Chudleigh TQ13 0DD (GB)
(72) Inventor: Buckholt, James Michael, Chudleigh TQ13 0DD (GB)
(74) Representative: Cyrson, Matthew Dominic

(57) **Abstract**

A golf-course hole cutter (10) which includes a ground penetration element (12) having a leading surface (18) for cutting the turf and a trailing surface (19) for receiving an impact so as to cause the leading surface (18) to penetrate the turf. An impactor (14) is moveable relative to the ground penetration element (12) having a head for impacting the trailing surface (19). The ground penetration element (12) and the impactor (14) each include at least two elongate guide elements which cooperate with each other to guide movement between the impactor (14) and the ground penetration element (12). A lock (40) for locking the impactor (14) relative to the ground penetration element can furthermore be provided.

## Description

The present invention relates to a hole cutter, particularly to a golf-course hole cutter for cutting a cup or hole in a putting green of a golf course.

A golf course typically has a number of putting greens, which are formed of turf. A hole, which is typically termed a cup, is required to be made into the turf of each putting green. The location of the cup of the putting green may need to be moved from time to time, for example, to vary the course.

As such, there is a requirement to make and fill holes in the turf of the putting greens of a golf course. It is desirable to do this as quickly and easily as possible, to minimise any disruption to playing time on the golf course, and as cleanly as possible, to minimise any damage to the putting surface.

A golf-course hole cutter is a tool which is typically used to make and fill holes on a golf course. However, these can be difficult to use, due at least in part to their relatively high weight. It is desirable to improve the ease of use of a golf-course hole cutter.

The present invention seeks to provide a solution to this.

According to a first aspect of the present invention, there is provided a golf-course hole cutter for cutting a hole in turf of a golf course, the golf-course hole cutter comprising: a ground penetration element having a leading surface for cutting the turf, a trailing surface for receiving an impact so as to cause the leading surface to penetrate the turf, and at least two elongate first guide elements spaced apart from each other and extending from or from adjacent to the trailing surface; and an impactor moveable relative to the ground penetration element having a head for impacting the trailing surface of the ground penetration element, and at least two elongate second guide elements spaced apart from each other; the first guide elements being receivable by the second guide elements, or *vice versa,* to guide movement between the impactor and the ground penetration element.

The at least two elongate first guide elements can therefore laterally engage with the second guide elements and so provide stability to the impactor when moved away from the ground penetration element. As such, when the impactor is raised and lowered relative to the ground penetration element, it can remain aligned with the ground penetration element, and is more stable than if only a single elongate first and second guide element were used. Additionally, if the hole cutter is being used to extract a core of turf and/or soil, the plurality of guide elements can more efficiently transmit torque from the user to the ground penetration element.

Preferably, there may be at least three said elongate first guide elements spaced apart from each other, and at least three said second guide elements which are spaced apart from each other. Three pairs of cooperative guide elements can provide greater stability than two such pairs.

Advantageously, the at least three said elongate first guide elements may be equiangularly or substantially equiangularly arranged around a centre of the trailing surface. Such an arrangement may provide greater stability.

Beneficially, the first guide elements may be rods and the second guide elements may be tubes, the rods being receivable in the tubes.

Optionally, the hole cutter may further comprise a lock for locking the impactor relative to the ground penetration element. This allows the user to prevent the impactor from being raised relative to the ground penetration element when this would undesirable. As such, the impactor can be used to lift the entire hole cutter from the ground, and/or to carry the entire hole cutter, without relative motion of the impactor and ground penetration element disrupting this.

Additionally, the lock may comprise: at least one of the first guide elements having a first element portion and a second element portion, the second element portion having a greater width than the first element portion; the impactor having at least one receiver including a first receiver portion and a second receiver portion, the first receiver portion having a width less than the second element portion, and the second receiver portion having a width which is greater than the second element portion; so that when the second receiver portion is aligned with the second element portion the impactor is unlocked relative to the ground penetration element, and when the first receiver portion is aligned with second element portion the impactor is locked relative to the ground penetration element. To prevent or limit motion therebetween, the lock is required to fix the impactor and ground penetration element together. This is conveniently done by fixing the first guide elements to the impactor, since the first guide elements extend upwards and are close to a top of the hole cutter. As such, the lock can be close to the top of the hole cutter, which makes it easier to access for a user.

In a preferable embodiment, the first element portion may be at least a portion of a shaft of the first guide element, and the second element portion may be a head of the first guide element.

Optionally, the first and second receiver portions may be portions of a hole, the second element portion being receivable through the second receiver portion and not through the first receiver portion.

Preferably, the first and second receiver portions may be angularly offset from each other, so that rotation of at least part of the impactor relative to the said at least one of the first guide elements permits the alignment of the second receiver portion to be varied between the first element portion and the second element portion. Additionally, the first and second receiver portions are defined by a rotatable locking plate which is securable relative to the remainder of the impactor in at least two angularly offset states. This allows for a lock which is operated by rotation to be provided.

Advantageously, the locking plate is securable relative to the remainder of the impactor via a locking pin. This can prevent or limit the risk of the lock being unlocked unintentionally.

Beneficially, the impactor may further comprise a handle for being held by a user to move the impactor relative to the ground penetration element. The handle allows for the hole cutter to be manually actuated.

Optionally, the leading surface is circular or substantially circular and has a diameter of at most 4¼ inches [108 mm] or substantially at most 4¼ inches [108 mm]. This allows for a regulation or conventional size golf cup to be cut.

Additionally, the golf hole cutter may further comprise a guard at the ground penetration element for preventing over-insertion of the ground penetration element into the turf. This can make it straightforward to cut a cup of a predetermined depth.

Preferably, the guard is securable to the hole cutter in a plurality of positions for permitting the ground penetration element to penetrate the turf to a plurality of different depths.

Advantageously, the ground penetration element may be tubular for receiving a core comprising turf. This allows for the turf and/or soil which is cut from the ground to be easily extracted and/or lifted. The turf and/or soil can then be replaced in a previous hole or cup which is to be filled, to allow quick and straightforward maintenance of the golf course.

Beneficially, the hole cutter may further comprise a ram receivable in the ground penetration element for ramming the core from the ground penetration element. This allows for the core to be to be easily removed from the ground penetration.

In a preferable embodiment, the ram has a shaft, the shaft having a receiver, and the golf-course hole cutter further comprises a driving element for engaging the receiver to drive the ram to ram the core. The driving element allows for the ram to be conveniently actuated.

Additionally, the shaft may comprise a plurality of receivers, the driving element engageable with each of the receivers.

Preferably, the receivers may have a saw-tooth profile, the driving element comprising a pawl which is biased to engage the receivers and moveable to engage and push the recesses to drive the ram to ram the core. The saw-tooth profile provides a rack. As such, the hole cutter has a ratchet for operating the ram. This allows for the ram to be operated by repeated actuations of a lever, which may allow for less force, or a force applied over shorter duration, to operate the ram.

According to a second aspect of the present invention, there is provided a golf-course hole cutter for cutting a hole in turf of a golf course, the golf-course hole cutter comprising: a ground penetration element having a leading surface for cutting the turf, a trailing surface for receiving an impact so as to cause the leading surface to penetrate the turf; and an impactor moveable relative to the ground penetration element having a head for impacting the trailing surface of the ground penetration element; and a lock for locking the impactor relative to the ground penetration element, the ground penetration element having a first element portion and a second element portion, the second element portion having a greater width than the first element portion, the impactor having at least one receiver including a first receiver portion and a second receiver portion, the first receiver portion having a width which is less than the second element portion, and the second receiver portion having a width greater than the second element portion; so that when the second receiver portion is aligned with the second element portion the impactor is unlocked relative to the ground penetration element, and when the first receiver portion is aligned with second element portion the impactor is locked relative to the ground penetration element.

According to a third aspect of the present invention, there is provided a golf-course hole cutter for cutting a hole in turf of a golf course, the golf-course hole cutter comprising: a ground penetration element having a leading surface for cutting the turf, a trailing surface for receiving an impact so as to cause the leading surface to penetrate the turf; and an impactor moveable relative to the ground penetration element having a head for impacting the trailing surface of the ground penetration element; and a rotatable lock for locking the impactor relative to the ground penetration element.

The invention will now be more particularly described, by way of example only, with reference to the accompanying drawings, in which:
Figure 1 shows a front perspective view of an embodiment of a golf-course hole cutter in accordance with first, second, and third aspects of the invention;
Figure 2 shows a side perspective view of the golf-course hole cutter of Figure 1;
Figure 3 shows the golf-course hole cutter of Figure 1 with an impactor raised relative to a ground penetration element;
Figure 4 shows a further perspective view of the golf-course hole cutter of Figure 1, with a handle removed and a lock in a locked condition;
Figure 5 shows the view of Figure 4, with the lock in an unlocked condition;
Figure 6 shows a lower perspective view of the golf-course hole cutter of Figure 1; and
Figure 7 shows an enlargement of a portion of the golf-course hole cutter of Figure 1.

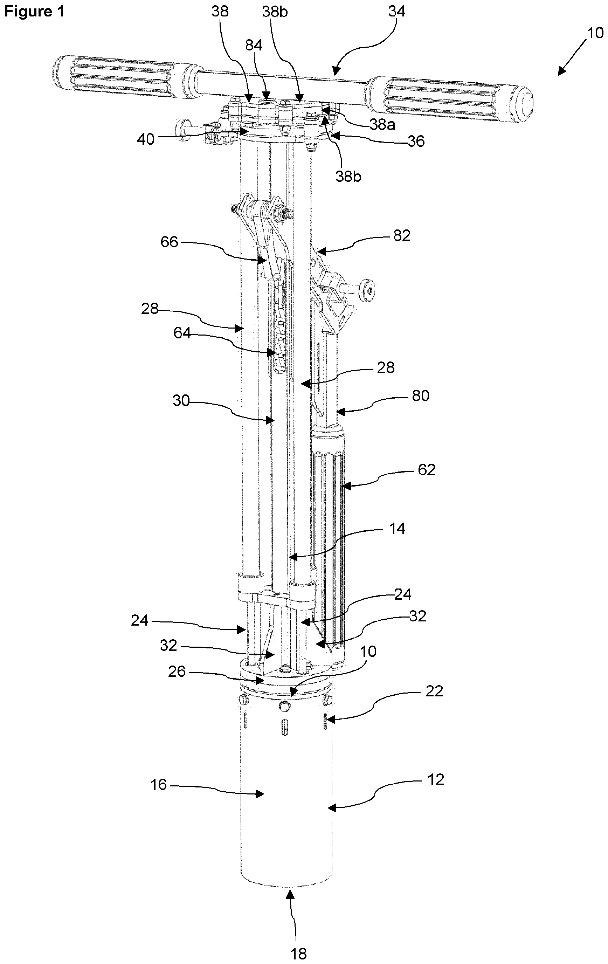

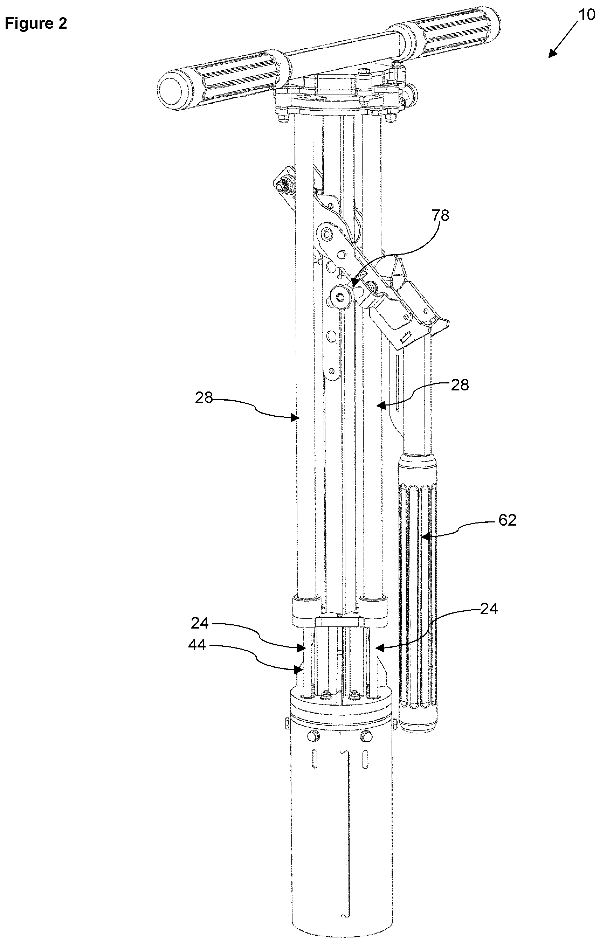

Referring firstly to Figures 1 to 3, there is shown a golf-course hole cutter 10 which comprises a ground penetration element 12 and an impactor 14 moveable relative to the ground penetration element 12.

The ground penetration element 12 has a tubular or substantially tubular body 16, which is here preferably cylindrical or substantially cylindrical. At an in use lower end of the ground penetration element 12 is a leading surface 18 for cutting turf. Since the tubular body 16 is cylindrical, the leading surface 18 is circular or substantially circular.

At an in use upper end of the ground penetration element 12 is a trailing surface 19 for receiving an impact, blow or engagement from the impactor 14.

The ground penetration element 12 is hollow or substantially hollow, defining a cavity for receiving a core of turf and/or soil. The ground penetration element 12 is open at least at the leading surface 18, and so the leading surface 18 preferably defines a circular or substantially circular opening. The trailing surface 19 may define a closed upper end of the tubular body 16, although it will be appreciated that the tubular body 16 may not necessarily be completely closed at an upper end.

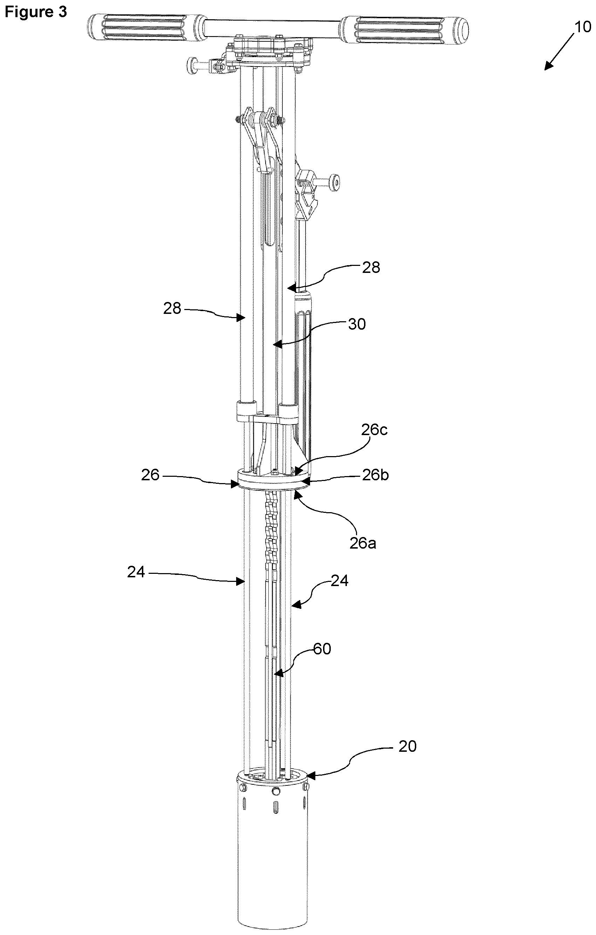

The trailing surface 19 may be at least in part planar or flat, in particular having a planar rim 20 for receiving an impact from the impactor 14. This is best shown in Figure 3.

The leading surface 18 preferably has a diameter of at most 4¼ inches [108 mm]. This corresponds to a diameter of a conventional cup of a golf course. Here the tubular body 16 has a uniform diameter, so that the diameter of the tubular body 16 is 4¼ inches [108 mm]. However, it will be appreciated that in fact the leading surface 18 could have a diameter of less than is 4¼ inches [108 mm], with the tubular body 16 tapering to a diameter of 4¼ inches [108 mm]. This could allow formation of a tapering cup.

The ground penetration element 12 may generally be considered to be a blade. The leading surface 18 may be sharp if so required, and the ground penetration element 12 may be swappable with other ground penetration elements 12 of varying sharpness and/or hardness to suit cutting of different soil types.

The ground penetration element 12 preferably has a thin wall, and may, for example, be formed via shaping or bending sheet metal.

To prevent over-insertion of the ground penetration element 12 into the turf, there is preferably a guard or shield, not shown, at the ground penetration element 12. This may take the form of a radially protruding flange or rim which may engage with the surface of the turf once the ground penetration element 12 has reached a desired depth in the turf.

The guard may be movable in an axial direction of the ground penetration element 12 and lockable in different axial positions so as to allow for different depths of insertion. This may be achieved via attaching the guard via axially arranged connection slots 22, to which fasteners can secure the guard.

The ground penetration element 12 preferably further comprises at least two elongate first guide elements 24 spaced apart from each other and extending or projecting from the trailing surface 19 or from at or adjacent to the trailing surface 19. The guide elements project in an opposing direction from the trailing surface 19 to the tubular body 16.

The first guide elements 24 are here rods or shafts. Here there are in fact three elongate first guide elements 24, and there may be more than three if so required. The rods are cylindrical or substantially cylindrical, having a circular cross section. The rods are substantially equiangularly and/or equidistantly spaced apart from each other, for example having a generally triangular arrangement.

The impactor 14 has an impactor head 26 for impacting the trailing surface 19 of the ground penetration element 12. To provide good contact between the impactor 14 and the ground penetration element 12, the impactor head 26 corresponds in shape and/or size to the trailing surface 19. For example, the impactor head 26 may be flat, or at least having a flat portion. In particular, a rim of the impactor head 26 may be flat. The impactor head 26 may be circular or substantially circular. The impactor head 26 preferably has a diameter of at most 4¼ inches [108 mm].

The impactor head 26 preferably has a plurality of holes, each hole configured to receive the first guide elements therethrough.

The impactor head 26 may comprise multiple layers. For example, there may be a lower surface 26a or part of the head for engaging the trailing surface 19 of the ground penetration element 12. The lower surface 26a may comprise metal, such as steel. Upward of the lower surface there may be a shock absorbing layer 26b, for example formed from rubber or another elastomeric or shock-absorbing material. Upward of the shock absorbing layer 26b there may be a support layer 26c which may, for example, be formed from metal such as steel. The multiple layers may be attached together via one or more bolts or other fasteners, for example.

The impactor 14 includes at least two second guide elements 28, and here there are at least three second guide elements 28. As such, the number of second guide elements 28 corresponds to the number of first guide elements 24. The second guide elements 28 receive the first guide elements 24, and therefore may be receivers 48, tubes or sheaths. The second guide elements 28 here do not start from the impactor head 26, and are instead spaced apart therefrom, being supported by another part of the impactor.

The first and second guide elements 24, 28 may each be long, extending along at least a majority of the total length of the hole cutter 10. In particular, the first and second guide elements 24, 28 may each have a length of at least 300 mm, and more preferably at least 500 mm. This allows for the impactor 14 to remain stable relative to the trailing and leading surfaces 19, 18 of the ground penetration element 12, despite being raised by a significant distance thereover.

The impactor 14 includes an impactor shaft 30 which extends upwardly from the impactor head 26, and there may be one or more braces 32 or brackets which connect between the impactor head 26 and the impactor shaft 30. The braces 32 may be secured between the support layer 26c of the impactor head 26 and the impactor shaft 30, via welding for example.

The impactor 14 includes a handle 34 for raising the impactor 14 relative to the ground penetration element 12. The handle 34 connects to the impactor shaft 30 at least, for example by welding and/or being connected via bolts to a connecting plate 36. The connecting plate and/or other components may include holes, cut-outs or cavities therein for weight saving purposes. Here the handle 34 is a handlebar, having grips towards each end for allowing use of the handle 34 in a two-handed manner.

The handle 34 may have a mount 38 which includes a multi-layer formation, similar to the impactor head 26. For example, the mount 38 may include a shock-absorbing layer 38a, which may be sandwiched between two structural layers 38b, formed of metal for example. The layers may be secured together via bolts.

As mentioned previously, the impactor 14 is moveable relative to the ground penetration element 12. As such, the impactor 14 is moveable between a raised position, as shown in Figure 3, and a lowered position, as shown in Figure 1.

The impactor 14 is preferably lockable to the ground penetration element 12, to selectably prevent the raising of the impactor 14 relative to the ground penetration element 12. As such, the hole cutter 10 includes a lock 40 for locking the impactor 14 in a lowered position.

The lock 40 preferably takes the form of selectably securing the first guide elements 24 to the impactor 14, in particular at or adjacent to the handle 34.

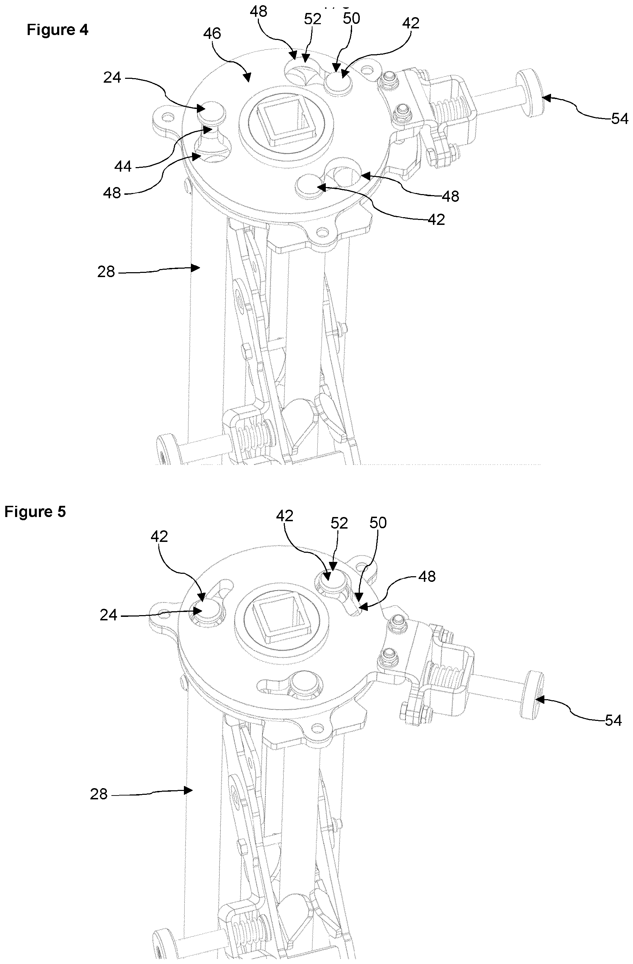

Referring now to Figures 4 and 5, the first guide elements 24 extend through the second guide elements 28, and protrude from the ends thereof when the impactor 14 is in a lowered condition relative to the ground penetration element 12. As such, the first guide elements 24 can sit proud of the second guide elements 28. An exposed portion of each first guide element 24 includes a guide-element head 42 which has a wider diameter than a guide-element shaft 44 of the first guide element 24.

The impactor 14 includes a locking plate 46, locking disc, or locking element which has a receiver 48 for each first guide element 24. Each receiver 48 has a first receiver portion 50 which has a width which is narrower than a width of the guide-element head 42, so that the guide-element head 42 cannot fit therethrough. Each receiver 48 further has a second receiver portion 52 which has a width which is wider than the width of the guide-element head 42, so that the guide-element head 42 can fit therethrough. The first receiver portion 50 may be considered to be a head of the receiver 48, and the second receiver portion 52 may be considered to be a tail of the receiver 48. The first and second receiver portions 50, 52 are rotatably or angularly offset from each other. Here the locking plate 46 is circular or substantially circular. The ends of the receivers 48 may act as stops to prevent over-rotation of the locking plate 46.

When the impactor 14 and the ground penetration element 12 are in the lowered condition, the guide-element shafts 44 extend through corresponding receivers 48 of the locking plate 46. As such, the locking plate 46 sits along the length of the guide-element shaft 44, and just below the guide-element head 42.

As shown in Figure 4, to lock the impactor 14 to the ground penetration element 12, the locking plate 46 is positioned so that the first receiver portions 50 are aligned with the first guide elements 24. As such, the guide-element heads 42 cannot fit through the receiver 48 and the impactor 14 and the ground penetration element 12 are locked together.

As shown in Figure 5, to unlock the impactor 14, the locking plate 46 is rotated so that the second receiver portions 52 are aligned with the first guide elements 24. As such, the guide-element heads 42 can fit through the receivers 48 and the impactor 14 is free to move from the lowered position to the raised position.

The locking plate 46 is securable or fixable relative to the remainder of the impactor 14 to prevent and permit rotation of the locking plate 46 as so required. Here the locking plate 46 is securable by a locking pin 54, bolt or latch. The locking pin 54 is mounted to the locking plate 46, and a body of the impactor 14 includes a hole for receiving the locking pin 54. When the locking plate 46 is the locked configuration, the locking pin 54 is received in the hole which prevents unintentional rotation of the locking plate 46 to the unlocked condition. To allow the locking plate 46 to be rotated, the locking pin 54 is removed from the hole and thus the locking plate 46 is free to rotate. In the unlocked condition, the locking pin 54 may rest against a strike plate with a recess, for example. However, it will be appreciated that the locking pin 54 may also be received in a hole in the unlocked condition. The locking pin 54 may be biased, for example via a spring, to remain inserted in the hole until manually removed.

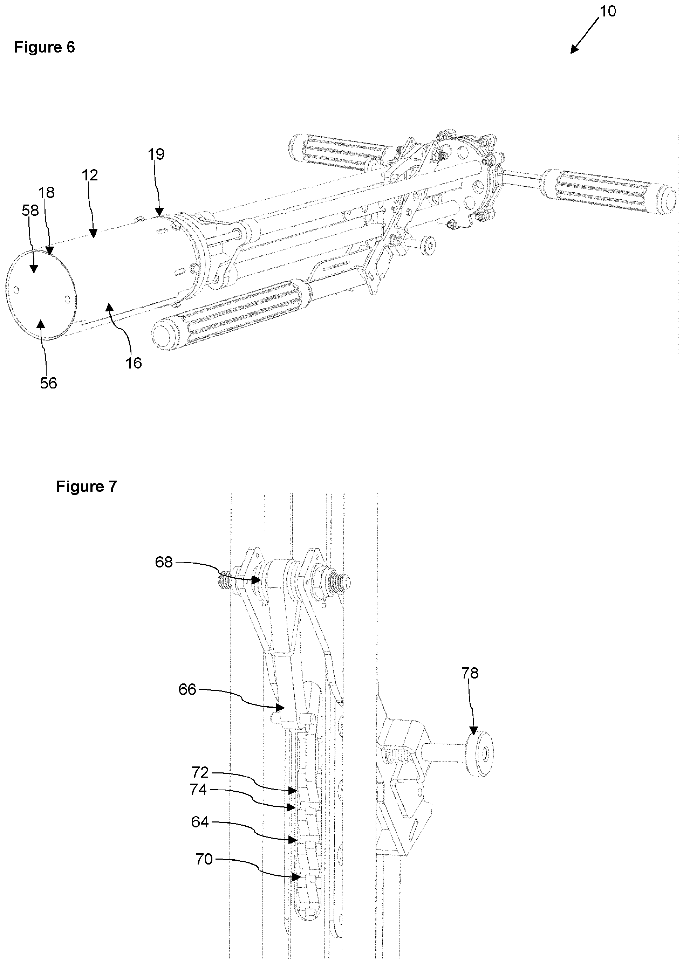

Referring now to Figure 3 and Figure 6, the hole cutter 10 includes a ram 56, plunger, or piston for pushing the core or clod of turf from the ground penetration element 12. The ram 56 includes a ram head 58 and a ram shaft 60 which extends upwardly from the ram head 58.

The ram head 58 is received in the tubular body 16 and is moveable from a raised condition, in which it is at or adjacent to the trailing surface 19 of the ground penetration element 12, to a lowered condition, in which it is at or adjacent to the leading surface 18 of the ground penetration element 12. The ram head 58 has a ramming surface which preferably corresponds to the shape of the tubular body 16, for example being circular and sized to fit closely within the tubular body 16.

The ram shaft 60 is elongate and extends upwardly through the trailing surface 19 of the ground penetration element 12 and may extend into the impactor shaft 30 which may act as a sheath for receiving the ram shaft 60. Since the ram shaft 60 is received by the impactor shaft 30, it will be appreciated that in some instances the ram shaft 60 may act as a further first guide element, and the impactor shaft 30 may act as a further second guide element.

Referring to Figure 1 and Figure 7, there is preferably a driving means or driving element for driving the ram 56 through the ground penetration element 12. For example, generally there may be a lever 62 having a handle, the lever 62 for pushing the ram 56 through the ground penetration element 12. More specifically, the driving means may include a ratchet, the ram shaft 60 including a rack 64 and there being a pawl 66 pivotally mounted to the lever 62. There is preferably a hole, cut-out or window in the impactor shaft 30 for exposing the rack 64.

There is a biasing means for biasing an end of the pawl 66 into engagement with the rack 64. This may be achieved by a torsion spring 68, for example. The rack 64 includes a plurality of teeth 70 having a saw-tooth profile, a space between adjacent teeth forming a receiver. As such, each tooth 70 has a slope 72 for allowing the end of the pawl 66 to pass thereacross in one direction, and a stop 74 for stopping the pawl 66 from passing thereacross in the other direction and against which the end of the pawl 66 can drive.

The lever 62 is pivotably mounted relative to the impactor 14 and there is preferably a lock for locking the lever 62 in place relative to the impactor 14. The lock may include a locking pin 78 mounted to the lever 62 and which is biased, for example via a spring, into a hole on the impactor 14. The locking pin 78 can be removed from the hole to allow the lever 62 to be pivoted relative to the impactor 14.

The lever 62 preferably includes two portions which are angled relative to each other, a first portion 80 having a grip, and a second portion 82 for mounting the pawl 66. This allows for at least a portion of the lever 62 to extend vertically when not in use and thereby reduce an overall footprint of the hole cutter 10.

The hole cutter 10 may have a level 84, such as bull's eye level, to determine if the hole cutter 10 is oriented vertically and remains vertical, which may be important as the hole cutter 10 is being driven into the ground. The level 84 may be positioned at the top of the hole cutter 10, for example on the mount of the handle 34.

The hole cutter 10 may be provided with a docking station or stand, for supporting it when not in use.

In use, a user, such as a greenkeeper, may first remove the hole cutter 10 from its docking station, if provided, and position the hole cutter 10 at a location on the putting green where the cup or hole is to be made. The hole cutter 10 is a manual device, and so can be used by a single person and does not require additional machinery or a power source to operate, beyond the manual force provided by a person.

If required, the guard may be set to allow a suitable depth of insertion of the ground penetration element 12, and the level 84 may be checked to ensure that the hole cutter 10 is vertical.

The impactor 14 and the ground penetration element 12 are then unlocked. This is achieved via removing the locking pin 54 of the locking plate 46 from its hole and rotating the locking plate 46 into the unlocked condition. The guide element heads 42 are thus aligned with the second portion of the receiver 48, and the impactor 14 can be raised relative to the ground penetration element 12.

The user manually grasps the impactor 14 by the handle 34 and raises the impactor 14 into the raised position. The user then allows the impactor 14 to fall under gravity, whilst still retaining hold of the handle 34. The weight of the impactor 14, which may be formed from high density material, such as metal for example steel, provides sufficient force under gravity for the impactor head 26 to impact the trailing surface 19 of the ground penetration element 12 and drive the leading surface 18 into the turf. The initial impact may only drive the ground penetration element 12 into the turf by a small distance, such as 20 mm. The ram head 58 moves upwardly in the ground penetration element 12 under force of the turf, and so a core of turf and/or soil begins to form in the tubular body 16.

The level 84 may be rechecked, and then the lifting and falling of the impactor 14 may be repeated in a similar fashion until the ground penetration element 12 has penetrated the turf to a sufficient depth. The number of repetitions may vary depending on the type of soil and the height which the impactor 14 is raised.

Whilst the impactor 14 is being raised and is falling, the first and second guide elements 24, 28 may laterally engage with each other to prevent or limit lateral movement between the impactor 14 and the ground penetration element 12. This ensures that the impactor 14 is stable and is easy to use.

With the ground penetration element 12 in the ground, the impactor 14 can then be locked relative to the ground penetration element 12 to prevent relative movement. This is achieved via moving the locking plate 46 back into the locked condition. The entire hole cutter 10 can then be raised up so that the ground penetration element 12 escapes the ground, taking a core of turf and/or soil with it. This forms a hole or cup in the turf. The core should break from the ground as the hole cutter 10 is being raised, although the ease at which this occurs may depend on the soil type.

The hole cutter 10 can then be moved to where the previous hole or cup is present. The hole cutter 10 may be conveniently carried in a horizontal orientation by the handle of the lever 62. The ground penetration element 12 is inserted into the hole or cup and the ram 56 is then actuated to push the core of turf into the previous cup.

To actuate the ram 56, the lever 62 is unlocked relative to the impactor 14 via the locking pin 54. The lever 62 is then raised upwards which forces the pawl 66 down and into engagement with the stop 74 of a lower tooth 70 on the rack 64. The lever 62 is further raised which pushes the pawl 66 against the stop 74 and so drives the ram 56 downwards to ram the core at least partially out of the ground penetration element 12 and thereby push the hole cutter 10 upwards. If further ramming is required, the lever 62 can then be lowered which causes the pawl 66 to track along the teeth 70, passing up the slope 72 of the teeth 70 of the rack 64. The lever 62 can then be raised again to engage the stop 74 of another tooth 70 and then push the ram 56 to eject the core from the ground penetration element 12. The lever 62 can then be locked back in position.

It is therefore possible to provide a hole cutter which is convenient to use. Since a ground penetration element and impactor include at least two cooperative elongate guide elements, the impactor can be raised relative to the ground penetration element stably and securely. This allows greater manual ease of use, despite the heavy weight of the impactor. A rotatable locking means is also provided, to allow the impactor to be conveniently locked and unlocked relative to the ground penetration means.

The words 'comprises/comprising' and the words `having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. A golf-course hole cutter (10) for cutting a hole in turf of a golf course, the golf-course hole cutter (10) comprising:
a ground penetration element (12) having
a leading surface (18) for cutting the turf,
a trailing surface (19) for receiving an impact so as to cause the leading surface (18) to penetrate the turf, and
at least two elongate first guide elements (24) spaced apart from each other and extending from or from adjacent to the trailing surface (19); and
an impactor (14) moveable relative to the ground penetration element (12) having
a head (26) for impacting the trailing surface (19) of the ground penetration element (12),
and at least two elongate second guide elements (28) spaced apart from each other;
the first guide elements (24) being receivable by the second guide elements (28), or *vice versa,* to guide movement between the impactor (14) and the ground penetration element (12).

2. A golf-course hole cutter (10) as claimed in claim 1, wherein there are at least three said elongate first guide elements (24) spaced apart from each other, and at least three said second guide elements (28) which are spaced apart from each other.

3. A golf-course hole cutter (10) as claimed in claim 2, wherein the at least three said elongate first guide elements (24) are equiangularly or substantially equiangularly arranged around a centre of the trailing surface (19).

4. A golf-course hole cutter (10) as claimed in any one of the preceding claims, wherein the first guide elements (24) are rods and the second guide elements (28) are tubes, the rods being receivable in the tubes.

5. A golf-course hole cutter (10) as claimed in any one of the preceding claims, further comprising a lock (40) for locking the impactor (14) relative to the ground penetration element (12).

6. A golf-course hole cutter (10) as claimed in claim 5, wherein the lock (40) comprises:
at least one of the first guide elements (24) having a first element portion (44) and a second element portion (42), the second element portion (42) having a greater width than the first element portion (44);
the impactor (14) having at least one receiver (48) including a first receiver portion (50) and a second receiver portion (52), the first receiver portion (50) having a width less than the second element portion (42), and the second receiver portion (52) having a width which is greater than the second element portion (42);
so that when the second receiver portion (52) is aligned with the second element portion (42) the impactor (14) is unlocked relative to the ground penetration element (12), and when the first receiver portion (50) is aligned with second element portion (42) the impactor (14) is locked relative to the ground penetration element (12).

7. A golf-course hole cutter (10) as claimed in claim 6, wherein the first and second receiver portions (50, 52) are portions of a hole, the second element portion (42) being receivable through the second receiver portion (52) and not through the first receiver portion (50).

8. A golf-course hole cutter (10) as claimed in claim 6 or 7, wherein the first and second receiver portions (50, 52) are angularly offset from each other, so that rotation of at least part of the impactor (14) relative to the said at least one of the first guide elements (24) permits the alignment of the second receiver portion (52) to be varied between the first element portion and the second element portion.

9. A golf-course hole cutter (10) as claimed in claim 8, wherein the first and second receiver portions (50, 52) are defined by a rotatable locking plate (46) which is securable relative to the remainder of the impactor (14) in at least two angularly offset states via a locking pin (54).

10. A golf-course hole cutter (10) as claimed in any one of the preceding claims, further comprising a guard at the ground penetration element (12) for preventing over-insertion of the ground penetration element (12) into the turf.

11. A golf-course hole cutter (10) as claimed in claim 10, wherein the guard is securable to the hole cutter (10) in a plurality of positions for permitting the ground penetration element (12) to penetrate the turf to a plurality of different depths.

12. A golf-course hole cutter (10) as claimed in any one of the preceding claims, further comprising a ram (56) receivable in the ground penetration element (12) for ramming the core from the ground penetration element (12).

13. A golf-course hole cutter (10) as claimed in claim 12, wherein the ram (56) has a shaft (60), the shaft (60) having a receiver, and the golf-course hole cutter (10) further comprises a driving element for engaging the receiver to drive the ram (56) to ram the core.

14. A golf-course hole cutter (10) as claimed in claim 13, wherein the shaft (60) comprises a plurality of receivers having a saw-tooth profile, the driving element engageable with each of the receivers, the driving element comprising a pawl (66) which is biased to engage the receivers and moveable to engage and push the receivers to drive the ram (56) to ram the core.

15. A golf-course hole cutter (10) for cutting a hole in turf of a golf course, the golf-course hole cutter (10) comprising:
a ground penetration element (12) having
a leading surface (18) for cutting the turf,
a trailing surface (19) for receiving an impact so as to cause the leading surface (18) to penetrate the turf; and
an impactor (14) moveable relative to the ground penetration element (12) having
a head (26) for impacting the trailing surface (19)of the ground penetration element (12); and
a lock (40) for locking the impactor (14) relative to the ground penetration element (12), the ground penetration element (12) having a first element portion (44) and a second element portion (42), the second element portion (42) having a greater width than the first element portion (44), the impactor (14) having at least one receiver including a first receiver portion (50) and a second receiver portion (52), the first receiver portion (50) having a width which is less than the second element portion (42), and the second receiver portion (52) having a width greater than the second element portion (42);
so that when the second receiver portion (52) is aligned with the second element portion (42) the impactor (14) is unlocked relative to the ground penetration element (12), and when the first receiver portion (50) is aligned with second element portion (42) the impactor (14) is locked relative to the ground penetration element (12).
